# EUROPEAN PATENT APPLICATION

(11) **EP 4 296 408 A1**
(43) Date of publication of application: **27.12.2023**
(21) Application number: 21967374.6
(22) Date of filing: 20.12.2021
(51) Int. Cl.: D01F 1/10, D01F 6/06, D01D 5/088, D01D 5/098, D01D 5/34

(54) **BIODEGRADABLE POLYOLEFIN FIBER AND METHOD FOR MANUFACTURING SAME**

(30) Priority: 10.12.2021 KR 20210177014
(71) Applicant: Kaf, Inc., Gimcheon-si, Gyeongsangbuk-do 39542 (KR)
(72) Inventor: HWANG-BO, Chul, Daegu 42961 (KR); YOO, Jong Seong, Daegu 42042 (KR); KIM, Yeong Su, Gimcheon-si, Gyeongsangbuk-do 39530 (KR)
(74) Representative: Isarpatent
(86) International application number: PCT/KR2021/019401
(87) International publication number: WO 2023/106501

(57) **Abstract**

Disclosed herein is a biodegradable polyolefin fiber comprising a core formed of polyolefin and an oxide layer formed outside the core according to an embodiment of the present invention. According to the present invention, the polyolefin fiber is capable of having biodegradable properties by mixing raw materials and the biodegradable additive in a specific condition. In addition, the oxide layer is formed on the surface of the polyolefin fiber, thereby improving the initial oxo-biodegradation rate and reducing the biodegradation time.

## Description

### TECHNICAL FIELD

### CROSS REFERENCE TO RELATED APPLICATION

This application claims the benefit of priority to Korean Patent Application No. 10-2021-0177014 filed on December 10, 2021, the entire contents of which are incorporated herein by reference.

The present invention relates to a biodegradable polyolefin fiber and a manufacturing thereof.

### BACKGROUND ART

Until recently, synthetic fibers such as polyester, polyolefin, or polyamide have been widely used. They have high strength and high elasticity as well as can be fabricated by a melt spinning so that they have advantages to provide new characteristics to fibers. However, these synthetic fibers are non-degradable materials which were not naturally decomposed and accordingly, most of them could not be buried and should be incinerated. While incinerating them, a lot of harmful substances are discharged and harmful gases occur to destruct nature. For this reason, various regulations have been enforced or introduced, and in many countries, it has been legally required for bio-degradable polymers to be employed.

In a recent year, environment pollution due to discarded synthetic fibers have been socially problems so that researches on bio-degradable polymer resins which can be completely decomposed have been actively conducted and aroused lots of interests globally. In specifically, as the limitation to use soil landfills and recycling have been seriously on the rise, self-decomposable resins after wasting have been developed actively.

Until today, as a result on bio-degradable polymers, starch-based polymers, cellulose acetate, polyhydroxy butylate, polylactide, polycaprolactone, polybutylene succinate, and so forth have been commercialized and come to market, and however, bio-degradable polyolefin does not secure properties to fabricate fibers until now and only fabricated as injection-molded articles.

Accordingly, it has been urgently required to develop polyolefin-based fibers capable of keeping inherent properties and being bio-degraded of synthetic fibers.

### SUMMARY OF THE INVENTION

It is therefore an object of the present invention to provide a biodegradable fiber having biodegradable characteristics by comprising a biodegradable additive in raw materials (resins) and improving initial biodegradability performance as well as satisfying properties of a conventional olefin-based fiber through specific spinning and drawing conditions.

In an aspect, the present invention provides a biodegradable polyolefin fiber comprising a core formed of polyolefin and an oxide layer formed outside the core.

In some embodiments, the fiber comprises the polyolefin and an oxo-biodegradable additive at a ratio of 95 to 99.5 : 0.5 to 5 based on the weight percent (%).

In some embodiments, the oxide layer comprises an oxo-biodegradable additive.

In some embodiments, the oxo-biodegradable additive is at least one selected from the group consisting of iron, manganese, copper, cobalt, and cesium.

In some embodiments, the fiber is drawn at a draw ratio of 1.5 or less, and has a melt index of 20 to 50.

In some embodiments, the fiber has a tensile strength of 1.8 to 4.0 g/d, and an elongation ratio of 300% to 500%.

In some embodiments, the fiber has a spinnability grade of S or A as measured by the following measuring method.

### [Measuring Method]

A spinnability grade is evaluated by the number of occurrences of trouble such as a break, drop, and so forth, which occur per 16 positions during spinning for 1 hour. Where, the grade of S, A, B, C, and D is ranked respectively when the number of troubles occurs 0, 1, 2, 3 to 4, and more than 5.

In another aspect, the present invention provides a method of preparing a biodegradable polyolefin fiber comprising: melting a polyolefin and an oxo-biodegradable additive to produce a melt, spinning the melt at a temperature of 250°C to 310°C at a speed of 500 to 1,500 m/min to produce a filament, cooling the produced filament, and drawing the cooled filament at a draw ratio of 1.5 or less.

In some embodiments, an oxide layer is formed on the produced filament during cooling the produced filament, and a temperature in a cooling area is ranged from 14°C to 18°C, and a wind speed of cooling air is ranged from 1.0 m/s to 3.0 m/s.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein
Fig. 1 shows a cross section of a biodegradable polyolefin fiber according to an embodiment of the present invention; and
Fig. 2 shows a method of preparing a biodegradable polyolefin fiber according to an embodiment of the present invention;

### DETAILED DESCRIPTION

Hereinafter, the present invention will be described in detail with reference to the drawings. In describing the present invention, detailed descriptions related to publicly known functions or configurations will be omitted in order not to obscure the gist of the present invention.

The present invention may, however, be embodied in different forms and should not be construed as limited to the embodiments set forth herein.

Various modifications to the preferred embodiments will be readily apparent to those skilled in the art and the generic principles herein may be applied to other embodiments. Thus, the present invention is not limited to the embodiment shown but is to be accorded the widest scope consistent with the principles and features described herein.

The present invention may, however, be embodied in different forms and should not be construed as limited to the embodiments set forth herein. The same reference numeral is used to refer to like elements throughout.

In the specification, terms such as "comprise" or "have" should be understood as designating that features, number, steps, operations, elements, parts, or combinations thereof exist and not as precluding the existence of or the possibility of adding one or more other features, numbers, steps, operations, elements, parts, or combinations thereof in advance.

As used herein, the terms "about", "substantially", etc. are intended to allow some leeway in mathematical exactness to account for tolerances that are acceptable in the trade and to prevent any unconscientious violator from unduly taking advantage of the invention in which exact or absolute numerical values are given so as to help understand the invention.

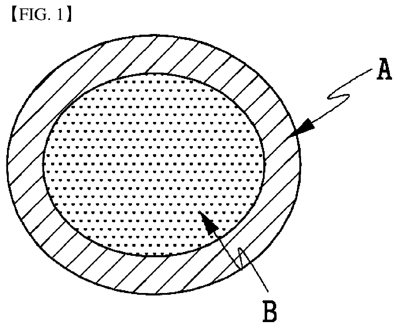

Fig. 1 shows a cross section of a biodegradable polyolefin fiber according to an embodiment of the present invention

Referring to Fig. 1, according to an embodiment of the present invention, the biodegradable polyolefin fiber comprising a core and an oxide layer formed outside the core is provided.

The core comprises a polyolefin as a main component and an oxo-biodegradable additive as a minor component.

The core is formed in a circular, triangle, or polygonal shape.

The biodegradable polyolefin fiber may comprise the polyolefin and an oxo-biodegradable additive at an ratio of 95 to 99.5 : 0.5 to 5, and more preferably, 98 to 99 : 1 to 2 based on the weight percent (%).

If the content of the oxo-biodegradable additive is less than 0.5 weight percent (%) or exceeds 5 weight percent (%), they are out of balance so that there is a problem that biodegradable characteristics are not provided. More concretely, if the content of the oxo-biodegradable additive is less than 0.5 weight percent (%), biodegradable characteristics are not provided. If the content of the oxo-biodegradable additive exceeds 5 weight percent (%), there are problems that the spinnability and tensile strength of the fiber are reduced.

The polyolefin of the present invention is high density polyethylene, straight-chain law density polyethylene, low density polyethylene, propylene (mono assembly propylene), ethylene-propylene copolymer, ethylene-propylene-butene-1 copolymer, polybutene-1, polyhexen-1, polyoctene-1, poly-4-methylpentene-1, polymethyl-pentene, 1,2 polybutadiene, 1,4-polybutadien, or a mixed resins thereof, and preferably, propylene.

The propylene has a melting index of 10 to 30 as measured under a load of 2.16 kg at a temperature of 230°C.

The propylene has a melting point ranged from 130°C to 170°C and a specific gravity of 0.88 to 0.95. If the propylene is out of the above-mentioned melting index, melting point, and specific gravity, the spinnability may be reduced. The above-mentioned range is desirable.

The oxide layer is formed outside the core layer, so that the biodegradable polyolefin fiber has a core-shell structure.

The oxo-biodegradable additive is a transition metal, and more concretely, iron, manganese, copper, cobalt, and cesium, and at least one selected from the group thereof. More concretely, oxo-biodegradable additive is iron, which is non-toxic compared to copper and has more excellent degradation rate as comparison with manganese.

The transition metal compound is capable of controlling a degradation rate depending on the exposure of the heat and light.

In addition, the biodegradable polyolefin fiber is drawn in a draw ratio of 1.5 or less, and more concretely, under 1.3 or less.

If the draw ratio exceeds 1.5, the oxide layer formed on the fiber is not uniformed or destructed partially, so that biodegradation characteristics becomes reduced and cutting occurs. In other words, the fiber has biodegradation characteristics by forming the oxide layer outside the fiber after spinning.

In addition, it is possible to make the oxide layer uniform and prevent the oxide layer be destructed by drawing the fiber in a draw ratio 1.5 or less.

The biodegradable polyolefin fiber has a melting index of 20 to 50, and concretely, 35 to 45.

If the melting index of the fiber exceeds 50, there are problems that the molecular weight thereof becomes decreased thereby reducing the strength of fibers or non-woven fibers. The above-mentioned range is desirable.

When the fiber is manufactured within the above-mentioned melting index range, the fiber according to the present invention has a tensile strength of 1.8 to 4.0 g/d and has an elongation ratio of 300% to 500 %.

If the tensile strength of the fiber is less than 1.8 g/d and the elongation thereof exceeds 500%, webs are not formed uniformly in manufacturing non-woven fibers and the strength of the non-woven fibers become reduced. If the tensile strength of the fiber exceeds 4.0 g/d and the elongation thereof less than 200%, the thermal bonding power of webs with a calender becomes weak and the temperature of the calender is increased so that non-woven fibers become stiff and the strength thereof is reduced. Thus, the above-mentioned range is desirable.

The biodegradable polyolefin fiber according to the present invention has a spinnability grade of S or A as measured by the following measuring method.

### [Measuring Method]

A spinnability grade is evaluated by the number of occurrences of trouble such as a break, drop, and so forth, which occur per 16 positions during spinning for 1 hour. Where, the grade of S, A, B, C, and D is ranked respectively when the number of troubles occurs 0, 1, 2, 3 to 4, and more than 5.

As mentioned above, the biodegradable polyolefin fiber according to the present invention comprises the core comprising polyolefin and the oxo-biodegradable additive and the oxide layer formed of the oxo-biodegradable additive. The biodegradable polyolefin fiber has a draw ratio of 1.5 or less, thereby preventing uneven or break of the oxide layer to enhance biodegradation characteristics.

In addition, the biodegradable polyolefin fiber according to the present invention is a monofilament.

The length of the monofilament is ranged from 1 to 100 mm and may be manufactured by various types of fibers or non-woven fibers such as air-through non-woven fibers, thermal-bond non-woven fibers, spulace non-woven fibers, needle-punching non-woven fibers, or air-laid non-woven fibers.

Furthermore, the biodegradable polyolefin fiber according to the present invention is a long fiber. Accordingly, long fibers can be formed of fabrics with biodegradable characteristics.

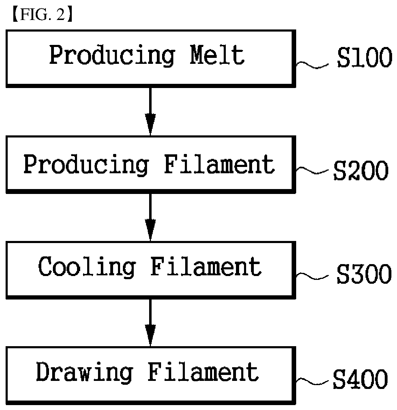

Fig. 2 shows a method of preparing a biodegradable polyolefin fiber according to an embodiment of the present invention.

Referring to Fig. 2, the present invention provides a method of preparing a biodegradable polypropylene fiber according to another embodiment of the present invention.

Concretely, the method of preparing a biodegradable polyolefin fiber comprises melting polyolefin and an oxo-biodegradable additive to produce a melt (S 100), spinning the melt at a temperature of 250°C to 310°C at a speed of 500 to 1,500 m/min to produce a filament (S200), cooling the produced filament (S300), and drawing the cooled filament at a draw ratio of 1.5 or less (S400).

In advance, in the melting the melt (S100), the polyolefin and oxo-degradable additive are mixed in a ratio of 98 to 99.5 : 0.5 to 2 based on the weight percent (%) and then melted to form the melt.

If the content if the oxo-biodegradable additive is less than 0.5 weight percent (%)or exceeds 5 weight percent (%), the polyolefin and the oxo-degradable additive are not balanced so that a spinnability is reduced by a cutting occurrence, and an oxide layer is not formed so that biodegradable characteristics can not be expressed.

The melting temperature in producing the melt is ranged from 250°C to 310°C, and more concretely, 270°C to 290°C.

If the melting temperature is less than 250°C, the polyolefin is not melted completely so that the polyolefin and the oxo-degradable additive are not easily mixed.

If the melting temperature exceeds 310°C, there is a problem that the polymer degradation of the polyolefin starts.

The time of producing the melt is not limited if the time is enough for the polyolefin and the oxo-biodegradable additive to be mixed.

Next, the melt is produced to produce a filament (S200).

The spinning is performed in a temperature of 250°C to 310°C at a speed of 500 to 1,500 m/min, and more concretely, in a temperature of 260°C to 300°C at a spinning speed of 1,100 to 1,300 m/min.

If the spinning temperature is less than 250°C, the melt flowability of the polymer is reduced, so that a spinnability is reduced and an oxide surface layer is not formed. If the spinning temperature exceeds 310°C, the polymer degradation starts so that the oxide layer is not formed uniformly or is not formed. Accordingly, the above-mentioned range is desirable.

In addition, if the spinning speed is less than 500 m/min, a cooling is delayed in producing fibers, thereby reducing the spinnability. If the spinning speed exceeds 1,500 m/min, cooling is delayed so that a time for forming the oxide surface layer is lack so that the oxide layer is not formed and the spinnability becomes reduced. Accordingly, the above-mentioned range is desirable.

Moreover, in the produced the filament (S200), a fiber type depends on a spinneret. That is, the fiber type may depend on a shape of a spinning hole formed in the spinneret.

Next, the cooling the produced filament is performed (S300).

The cooling the produced filament (S300) is performed in a temperature of 14 to 18 °C at a wind speed of cooling air of 1.0 to 3.0 m/s. If the cooling temperature and speed is outside the above-mentioned range, a spinnability becomes bad and the oxide layer is not formed uniformly, thereby deteriorating biodegradable characteristics. Accordingly, the above-mentioned range is desirable.

Through the cooling the produced filament (S300), the oxide layer is formed on a surface of the fiber.

Considering the producing the filament (S200) and cooling the produced filament (S300), after producing the filament by spinning in a temperature of 250°C to 310°C at a speed of 500 to 1,500 m/min, the filament is cooled in a temperature of 14°C to 18°C at a wind speed of cooling air of 1.0 to 3.0 m/s, so that the oxide layer is formed and a spinnability can be secured.

Finally, the filament in which the oxide layer is formed is drawn in a draw ratio of 1.5 or less (S400).

The drawing the filament (S400) further comprises heating the filament where the oxide layer is formed. In this case, a temperature, method, and so forth during heating is not limited.

In the drawing the filament (S400), the filament can be drawn in a draw ratio of 1.5 or less, and more concretely, in a draw ratio of 1.3 or less.

If the draw ratio exceeds 1.5, the oxide layer formed in the fiber becomes uneven or broken, so that biodegradable characteristics becomes reduced.

In other words, the oxide layer is formed outside the fiber through the oxo-biodegradable additive and a specific spinning condition to provide the polyolefin fiber with improved initial biodegradable speed.

Hereinafter, concrete examples in accordance with the present invention will be described in more detail.

### Example 1

In advance, a melt was produced by melting polypropylene of 99 weight percent (%) having a melting index of 10 under 2.16 kg load in a temperature of 230°C and an oxo-biodegradable additive (Fe) of 1 weight percent (%).

Then, after producing a filament by spinning the melt at a temperature of 282°C at a spinning speed of 1,200 m/min, the filament was cooled on a specific condition to form an oxide layer.

Finally, after that, after the filament in which the oxide layer was heated in a specific temperature, it was drawn in a draw ratio of 1.3 to prepare a fiber having biodegradable characteristic.

At this time, after spinning the filament, a temperature in a cooling area was 16°C and a wind speed of cooling air was 2 m/s.

### Example 2

A fiber having biodegradable characteristic was prepared in the same manner as in Example 1, except that a melt was produced by melting polypropylene of 99.5 weight percent (%) and an oxo-biodegradable additive (Fe) of 0.5 weight percent (%).

### Example 3

A fiber having biodegradable characteristic was prepared in the same manner as in Example 1, except that a melt was produced by melting polypropylene of 95 weight percent (%) and an oxo-biodegradable additive (Fe) of 5 weight percent (%).

### Example 4

A fiber having biodegradable characteristic was prepared in the same manner as in Example 1, except that a spinning speed was 500 m/min.

### Example 5

A fiber having biodegradable characteristic was prepared in the same manner as in Example 1, except that a spinning speed was 1,500 m/min.

### Example 6

A fiber having biodegradable characteristic was prepared in the same manner as in Example 1, except that a cooling temperature was set in 18°C.

### Example 7

A fiber having biodegradable characteristic was prepared in the same manner as in Example 1, except that a cooling temperature was set in 14°C.

### Example 8

A fiber having biodegradable characteristic was prepared in the same manner as in Example 1, except that a draw ratio was set in 1.5.

### Comparative Example 1

A fiber having biodegradable characteristic was prepared in the same manner as in Example 1, except that a melt was produced by melting polypropylene of 100 weight percent (%).

### Comparative Example 2

A fiber having biodegradable characteristic was prepared in the same manner as in Example 1, except that a melt was produced by melting polypropylene of 99.9 weight percent (%) and an oxo-biodegradable additive (Fe) of 0.1 weight percent (%).

### Comparative Example 3

A fiber having biodegradable characteristic was prepared in the same manner as in Example 1, except that a melt was produced by melting polypropylene of 90 weight percent (%) and an oxo-biodegradable additive (Fe) of 10 weight percent (%).

### Comparative Example 4

A fiber having biodegradable characteristic was prepared in the same manner as in Example 4, except that a spinning speed was 300 m/min.

### Comparative Example 5

A fiber having biodegradable characteristic was prepared in the same manner as in Example 4, except that a spinning speed was 1,800 m/min.

### Comparative Example 6

A fiber having biodegradable characteristic was prepared in the same manner as in Example 1, except that a cooling temperature was 10°C and a wind speed of cooling air was 2 m/s.

### Comparative Example 7

A fiber having biodegradable characteristic was prepared in the same manner as in Example 1, except that a cooling temperature was 20°C and a wind speed of cooling was 4 m/s.

### Experimental Example 1 : Analysis of Oxo-biodegradable Characteristic

The degradation characteristic of a fiber prepared in accordance with Examples 1 to 8 and Comparative Examples 1 to 7 was analyzed.

The analysis of the oxo-biodegradable characteristic was performed as below, and the result was shown in Table 1.

The analysis was performed under ASTM 5208 Standard (340 nm and 0.76 W/m²), elongation retention (5% or less), and molecular weight evaluation (5,000 or less).

**[Table 1]**

| **Classification** | **Oxo-Biodegradation (UV Pretreatment)** | | **Classification** | **Oxo-Biodegradation (UV Pretreatment)** | |
|---|---|---|---|---|---|
| | **Appearance** | **Elongation** | | **Appearance** | **Elongation** |
| **Example 1** | Breaking | 5% or less | **Comparative Example 1** | No change | 360% |
| **Example 2** | Breaking | 5% or less | **Comparative Example 2** | No change | 320& |
| **Example 3** | Breaking | 5% or less | **Comparative Example 3** | Breaking | 5% or less |
| **Example 4** | Breaking | 5% or less | **Comparative Example 4** | Breaking | 5% or less |
| **Example 5** | Breaking | 5% or less | **Comparative Example 5** | Breaking | 5% or less |
| **Example 6** | Breaking | 5% or less | **Comparative Example 6** | Unable to evaluate | - |
| **Example 7** | Breaking | 5% or less | | | |
| **Example 8** | Breaking | 5% or less | **Comparative Example 7** | Unable to evaluate | - |

As shown in table 1, we found that a breaking occurred in keeping an elongation 5% or less through oxo-biodegradable analysis in examples 1 to 8. Unlike this, appearances were not changed and the elongation was dramatically increased in comparative examples 1 and 2. In addition, in comparative examples 3 to 7, biodegradation occurred due to the oxo-biodegradable additive, we found that there were problems in spinnability and elongation as followings.

### Experimental Example 2: Analysis of Spinnability

The spinnability of examples 1 to 8 and comparative examples 1 to 7 was measured by the following measuring method.

### [Measuring Method]

A spinnability grade is evaluated by the number of occurrences of trouble such as a break, drop, and so forth, which occur per 16 positions during spinning for 1 hour. Where, the grade of S, A, B, C, and D is ranked respectively when the number of troubles occurs 0, 1, 2, 3 to 4, and more than 5.

**(Table 2]**

| **Classification** | **Spinnability** | **Classification** | **Spinnability** |
|---|---|---|---|
| **Example 1** | S | **Comparative Example 1** | S |
| **Example 2** | S | **Comparative Example 2** | S |
| **Example 3** | S | **Comparative Example 3** | B |
| **Example 4** | S | **Comparative Example 4** | B |
| **Example 5** | S | **Comparative Example 5** | B |
| **Example 6** | S | **Comparative Example 6** | D |
| **Example 7** | S | **Comparative Example 7** | D |
| **Example 8** | S | | |

As shown in table 2, we found that a spinnability in comparative examples 3 in which the oxo-biodegradable additive at a ratio of 10 based on the weight percent (%) was reduced, and in comparative examples 1 and 2, a spinnability was not reduced because the content of the oxo-biodegradable additive was low.

In addition, we found that a spinnability also was reduced in comparative examples 4 and 5 where a spinning speed was 300 m/min and 1,800 m/min. In specifically, in comparative examples 6 and 7 in which a cooling speed and spinning speed was out of the present invention, a spinnability was even worse. Unlike this, we found that a spinnability was excellent in examples 1 to 8.

### Experimental Example 3 : Analysis of Tensile strength and Elongation

The tensile strength and elongation of a fiber prepared according to examples 1 to 8 and comparative examples 1 to 7 were analyzed.

The analysis result was shown in the following Table 3.

**[Table 3]**

| **Class.** | **Tensile Strength (g/d)** | **Elongation (%)** | **Class.** | **Tensile Strength (g/d)** | **Elongation (%)** |
|---|---|---|---|---|---|
| Example 1 | 2.1 | 370 | Com.Example 1 | 2.2 | 400 |
| Example 2 | 2 | 380 | Com.Example 2 | 2.1 | 370 |
| Example 3 | 1.8 | 320 | Com.Example 3 | 1.4 | 200 |
| Example 4 | 2 | 400 | Com.Example 4 | 2.1 | 600 |
| Example 5 | 1.9 | 330 | Com.Example 5 | 1.5 | 250 |
| Example 6 | 2.1 | 360 | Com.Example 6 | Unable to evaluate | |
| Example 7 | 2.1 | 380 | Com.Example 7 | Unable to evaluate | |
| Example 8 | 2.3 | 410 | | | |

As shown in table 3, we found that a tensile strength and elongation were good in comparative examples 1 and 2 in which an oxo-biodegradable additive was not added or added with a small amount. In contrast, a tensile strength and elongation were reduced in comparative example 3 in which an oxo-biodegradable additive was added with a large amount. In specifically, in comparative examples 6 and 7 in which a cooling temperature and a spinning speed was out of the scope of the present invention, a tensile strength and an elongation were bad beyond measurement. Unlike this, we found that a spinnability was excellent in examples 1 to 8 according to the present invention.

According to an embodiment of the present invention, the polyolefin fiber is capable of having biodegradable properties by mixing raw materials and the biodegradable additive in a specific condition.

In addition, the oxide layer is formed on the surface of the polyolefin fiber, thereby improving the initial oxo-biodegradation rate and reducing the biodegradation time.

All such changes, modifications, variations and other uses and applications which do not depart from the spirit and scope of the invention are deemed to be covered by the invention which is limited only by the claims which follow.

## Claims

1. A biodegradable polyolefin fiber comprising:
a core formed of polyolefin; and
an oxide layer formed outside the core.

2. The biodegradable polyolefin fiber of claim 1, wherein the fiber comprises the polyolefin and an oxo-biodegradable additive at a ratio of 95 to 99.5 : 0.5 to 5 based on the weight percent (%).

3. The biodegradable polyolefin fiber of claim 1, wherein the oxide layer comprises an oxo-biodegradable additive.

4. The biodegradable polyolefin fiber of claim 3, wherein the oxo-biodegradable additive is at least one selected from the group consisting of iron, manganese, copper, cobalt, and cesium.

5. The biodegradable polyolefin fiber of claim 1, wherein the fiber is drawn at a draw ratio of 1.5 or less, and has a melt index of 20 to 50.

6. The biodegradable polyolefin fiber of claim 1, wherein the fiber has a tensile strength of 1.8 to 4.0 g/d, and an elongation ratio of 300% to 500%.

7. The biodegradable polyolefin fiber of claim 1, wherein the fiber has a spinnability grade of S or A as measured by the following measuring method.
[Measuring Method]
A spinnability grade is evaluated by the number of occurrences of trouble such as a break, drop, and so forth, which occur per 16 positions during spinning for 1 hour. Where, the grade of S, A, B, C, and D is ranked respectively when the number of troubles occurs 0, 1, 2, 3 to 4, and more than 5.

8. A method of preparing a biodegradable polyolefin fiber comprising:
melting a polyolefin and an oxo-biodegradable additive to produce a melt;
spinning the melt at a temperature of 250°C to 310°C at a speed of 500 to 1,500 m/min to produce a filament;
cooling the produced filament; and
drawing the cooled filament at a draw ratio of 1.5 or less.

9. The method of claim 8, wherein an oxide layer is formed on the produced filament during cooling the produced filament, and a temperature in a cooling area is ranged from 14°C to 18°C, and a wind speed of cooling air is ranged from 1.0 m/s to 3.0 m/s.
